# DEMANDE DE BREVET EUROPEEN

(11) **EP 3 124 138 A1**
(43) Date de publication de la demande: **01.02.2017**
(21) Numéro de dépôt: 16181239.1
(22) Date de dépôt: 26.07.2016
(51) Int. Cl.: B22F 1/00, B22F 3/00, B22F 3/105, B22F 3/24, B28B 1/00, B29C 67/00

(54) **PROCEDE ET MACHINE DE FABRICATION ADDITIVE REDUISANT LES RISQUES DE DISSEMINATION DE LA POUDRE LORS DE SA MANIPULATION**

(30) Priorité: 28.07.2015 FR 1557202
(71) Demandeur: Commissariat à l'énergie atomique et aux énergies alternatives, 75015 Paris (FR)
(72) Inventeur: DELLEA, Olivier, 42350 La Talaudiere (FR); BERNE, Philippe, 38000 Grenoble (FR); REVIRAND, Pascal, 38120 Saint Egreve (FR)
(74) Mandataire: Brevalex

(57) **Abrégé**

La présente invention concerne un procédé et une machine de fabrication additive d'un objet (20) à l'aide d'une poudre (P1), permettant de limiter les risques de dissémination de la poudre. Le procédé comprend les étapes successives suivantes :
- fabrication d'un bloc solide (6) à partir de la poudre (P1) et d'un matériau (P2) capable de se sublimer;
- chargement du bloc solide (6) dans un espace de chargement (4) de la machine (1) ;
- sublimation du matériau (P2) présent dans le bloc solide (6) et récupération de la poudre (P1) ; et
- fabrication additive de l'objet (20) par empilement de couches successives réalisées à l'aide de la poudre (P1) récupérée à l'étape précédente.

## Description

### DOMAINE TECHNIQUE

La présente invention se rapporte au domaine de la fabrication additive d'un objet, également dénommée impression 3D, par empilement de couches successives de poudre.

L'invention traite en particulier du problème de dissémination de la poudre lors de sa manipulation.

### ETAT DE LA TECHNIQUE ANTERIEURE

Dans le domaine de la fabrication additive d'un objet par empilement de couches successives de poudre, une première étape consiste généralement à charger la poudre dans un espace de chargement dédié de la machine utilisée. Lors de la manipulation de la poudre effectuée dans le cadre de ce chargement, le risque de dissémination de poudre est élevé. Un tel risque existe également lors de l'étape finale de de déchargement de l'objet fabriqué, entouré de la poudre non liée. Cette dissémination de poudre présente plusieurs inconvénients.

Tout d'abord, les particules de poudre émises dans l'atmosphère génèrent une perte de matière, dont l'impact financier peut être important. Ensuite, cette perte peut conduire à une variation non-désirée de composition. C'est par exemple le cas lorsque la poudre manipulée est constituée par un mélange de poudres de différentes natures, la stoechiométrie pouvant alors être altérée.

La dissémination de poudre peut également requérir une maintenance accrue des équipements. En effet, ces poudres déposées dans l'environnement de travail sont des vecteurs d'encrassement pour les appareillages. Par conséquent, des actions de maintenances spécifiques peuvent être engendrées par une dissémination non contrôlée.

Enfin, la dissémination de poudre peut engendrer des risques pour la santé et la sécurité des opérateurs. Par exemple, l'inhalation ou le contact cutané avec une poudre réputée dangereuse peut avoir des effets sur la santé, en provoquant des irritations, des allergies, des atteintes du système nerveux, voire des cancers. Même les poudres considérées comme inertes, c'est-à-dire sans toxicité spécifique, peuvent, lorsqu'elles sont présentes en quantité importante, provoquer une surcharge pulmonaire éventuellement associée à une fibrose pulmonaire.

Pour permettre une manipulation sécurisée au regard des problématiques de dissémination ou de pulvérulence de la poudre, plusieurs solutions ont déjà été proposées dans l'art antérieur, comme la mise en oeuvre d'installations de captage de poussières. Cependant, ces solutions restent perfectibles et ne s'avèrent pas nécessairement adaptées au domaine de la fabrication additive d'objet par empilement de couches successives de poudre.

### EXPOSÉ DE L'INVENTION

Pour répondre au moins partiellement aux inconvénients relatifs aux réalisations de l'art antérieur, l'invention a tout d'abord pour objet un procédé de fabrication additive d'un objet à l'aide d'au moins une poudre, comprenant les étapes successives suivantes :
- fabrication d'un bloc solide à partir de ladite poudre et d'un matériau capable de se sublimer;
- chargement du bloc solide dans un espace de chargement d'une machine de fabrication additive ;
- sublimation dudit matériau présent dans le bloc solide et récupération de ladite poudre ; et
- fabrication additive de l'objet par empilement de couches successives réalisées à l'aide de la poudre récupérée à l'étape précédente.

L'invention présente l'avantage d'un chargement de la poudre sous forme d'un bloc rendu solide par la présence du matériau capable de se sublimer. La nature solide du bloc contenant la poudre évite la dissémination de poudre au moment du chargement dans la machine de fabrication additive, ce qui réduit avantageusement les pertes de matières, les éventuelles variations non-désirées de composition de la poudre chargée dans cette machine, les besoins en maintenance des équipements, et les risques de santé et de sécurité.

L'invention présente de préférence au moins l'une des caractéristiques additionnelles suivantes, prises isolément ou en combinaison.

Le procédé comprend, après l'étape de fabrication additive de l'objet, une étape d'enrobage partiel ou total d'un ensemble comprenant la poudre non liée et l'objet entouré par cette poudre, l'enrobage étant effectué à l'aide d'un matériau capable de se sublimer, de préférence à l'aide de tout ou partie dudit matériau récupéré lors de ladite étape de sublimation. Cette spécificité permet de réduire les risques de dissémination de poudre lors du déchargement de l'ensemble comprenant l'objet. A cet égard, il est noté que pour l'enrobage, une autre source de matériau capable de se sublimer peut être utilisée, sans sortir du cadre de l'invention.

Pour effectuer l'enrobage, ledit matériau est appliqué autour dudit ensemble à l'état liquide afin d'imprégner par capillarité ladite poudre, l'application étant réalisée par application directe ou par projection de gouttes, ou bien ledit matériau est appliqué autour dudit ensemble à l'aide d'un spray, c'est-à-dire un dispositif mécanique permettant de vaporiser un liquide en fines gouttelettes, ce dispositif étant également dénommé aérosol.

Après l'étape d'enrobage, l'ensemble enrobé est extrait de la machine de fabrication additive et transféré à un autre poste de travail pour extraction dudit objet, par exemple dans une boîte à gants dans laquelle la dissémination de poudre peut être facilement contenue.

Après ladite étape de sublimation, il est mis en oeuvre une étape de récupération dudit matériau sublimé, à l'aide d'un piège froid. Cette récupération est réalisée pour la réutilisation du matériau à des fins d'enrobage comme mentionné ci-dessus, et/ou pour la fabrication de nouveaux blocs solides destinés à être chargés dans la machine de fabrication additive.

Ledit matériau capable de se sublimer est de préférence du cyclododécane.

Selon un premier exemple de réalisation, ladite étape de fabrication du bloc solide à partir de ladite poudre et du matériau capable de se sublimer, s'effectue de la manière suivante :
- mélange de ladite poudre et du matériau de façon à obtenir un mélange non pulvérulent ;
- compaction du mélange à température ambiante ;
- fusion dudit matériau à la surface extérieure du mélange compacté, sur une épaisseur donnée, de manière à obtenir après refroidissement une paroi extérieure solide s'étendant sur ladite épaisseur donnée, ladite paroi extérieure du bloc solide définissant une cavité intérieure dans laquelle se trouve le restant du mélange de ladite poudre et dudit matériau.

Selon un second exemple de réalisation, ladite étape de fabrication du bloc solide à partir de ladite poudre et du matériau capable de se sublimer, s'effectue de la manière suivante :
- réalisation d'un conteneur à l'aide dudit matériau, ledit conteneur comprenant un corps définissant une cavité intérieure, et un élément de fermeture de la cavité intérieure ;
- introduction de la poudre dans la cavité intérieure ;
- fermeture de la cavité intérieure à l'aide dudit élément de fermeture.

Selon un troisième exemple de réalisation, ladite étape de fabrication du bloc solide à partir de ladite poudre et du matériau capable de se sublimer, s'effectue de la manière suivante :
- amenée dudit matériau sous forme liquide dans un moule puis versement de la poudre dans le moule contenant le matériau sous forme liquide, ou inversement ;
- refroidissement du matériau de manière à obtenir un bloc solide de matériau contenant la poudre.

Selon un quatrième exemple de réalisation, ladite étape de fabrication du bloc solide à partir de ladite poudre et du matériau capable de se sublimer, s'effectue de la manière suivante :
- mise en place de la poudre dans un moule ;
- imprégnation de la poudre à la périphérie de celle-ci, à l'aide du matériau sous forme liquide et sur une épaisseur donnée, de manière à obtenir après refroidissement une paroi extérieure solide s'étendant sur ladite épaisseur donnée, ladite paroi extérieure du bloc solide définissant une cavité intérieure dans laquelle se trouve le restant de ladite poudre.

Par ailleurs, ladite étape de fabrication additive de l'objet est réalisée par l'une quelconque des techniques suivantes :
- fusion sélective par laser (de l'anglais « Selective Laser Melting » ou « SLM ») ou par faisceau d'électrons (de l'anglais « Electron Beam Melting » ou « EBM ») ;
- frittage sélectif par laser (de l'anglais « Selective Laser Sintering » ou « SLS ») ou par faisceau d'électrons ;
- tout autre type de technique de solidification de poudre sous l'action d'une source d'énergie de moyenne à forte puissance, le principe étant de faire fondre ou fritter un lit de poudre par faisceau laser ou faisceau d'électrons ; ou encore
- projection d'un liant sur les couches successives de poudre.

De préférence, ladite poudre est prise parmi :
- les poudres métalliques, par exemple en alliage de titane, alliage d'aluminium, alliage de nickel, superalliage, acier, acier inoxydable, réfractaire, métaux précieux, métaux purs ou sous forme d'alliage ;
- les poudres organiques, par exemple en polyamide, polyéther bloc amide, polystyrène, polyétheréthercétone (PEEK), polyaryléthercétone (PAEK), polyamide chargé en aluminium ;
- les poudres minérales, par exemple quartz, céramique, sulfate de calcium.

Bien entendu, des mélanges de ces poudres sont possibles, sans sortir du cadre de l'invention. Il en est de même pour les matériaux capables de se sublimer, qui peuvent eux aussi être mélangés comme cela sera mentionné ci-après.

L'invention a également pour objet une machine de fabrication additive pour la mise en oeuvre du procédé décrit ci-dessus, la machine comportant :
- ledit espace de chargement du bloc solide contenant la poudre et le matériau capable de se sublimer;
- des moyens permettant la sublimation dudit matériau présent dans le bloc solide ;
- un module de fabrication additive ; et
- des moyens permettant de récupérer, et d'acheminer vers ledit module, la poudre récupérée suite à la sublimation dudit matériau.

De préférence, la machine comprend des moyens de récupération dudit matériau sublimé, lesdits moyens comprenant ledit piège froid.

De préférence, la machine comporte des moyens pour enrober l'ensemble comprenant la poudre non liée et l'objet entouré par cette poudre.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique d'une machine de fabrication additive selon un mode de réalisation préféré de l'invention ;
- la figure 2 est une vue schématisant différentes étapes d'un procédé de fabrication additive d'un objet, à l'aide de la machine montrée sur la figure précédente ;
- les figures 3a à 3c représentent différentes étapes successives d'un premier exemple de fabrication d'un bloc solide comprenant la poudre et le matériau capable de se sublimer;
- les figures 4a à 4c représentent différentes étapes successives d'un second exemple de fabrication d'un bloc solide comprenant la poudre et le matériau capable de se sublimer;
- la figure 5 représente un troisième exemple de fabrication d'un bloc solide comprenant la poudre et le matériau capable de se sublimer;
- les figures 6a et 6b représentent différentes étapes successives d'un quatrième exemple de fabrication d'un bloc solide comprenant la poudre et le matériau capable de se sublimer;
- la figure 7 représente un premier exemple de réalisation de moyens permettant la sublimation du matériau, ces moyens équipant la machine de la figure 1 ;
- la figure 8 représente un second exemple de réalisation de moyens permettant la sublimation du matériau, ces moyens équipant la machine de la figure 1 ;
- la figure 9 représente un premier exemple de réalisation d'un module de fabrication additive équipant la machine de la figure 1 ;
- la figure 10 représente un second exemple de réalisation d'un module de fabrication additive équipant la machine de la figure 1 ; et
- la figure 11 représente un exemple de réalisation des moyens pour enrober l'ensemble comprenant l'objet réalisé et la poudre non liée qui l'entoure, ces moyens équipant la machine de la figure 1.

### EXPOSÉ DÉTAILLÉ DE MODES DE RÉALISATION PRÉFÉRÉS

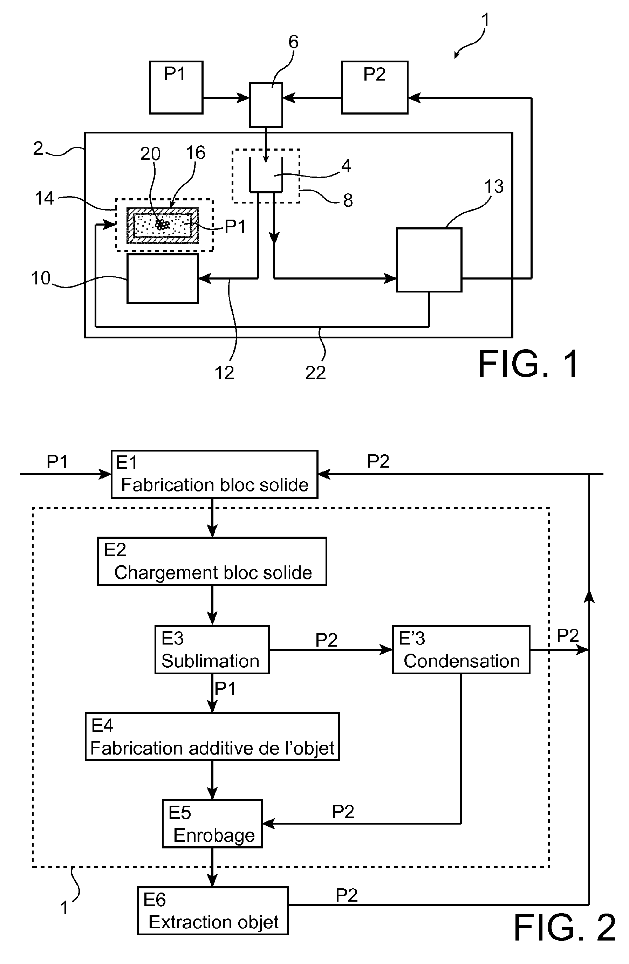

En référence tout d'abord à la figure 1, il est représenté une machine de fabrication additive 1, également dénommée machine d'impression 3D, la machine 1 se présentant selon un mode de réalisation préféré de l'invention.

La machine 1 présente un capotage extérieur 2, réalisé d'un seul tenant ou à l'aide de plusieurs éléments de capotage rapportés les uns sur les autres. Ce capotage 2 comporte également des trappes classiques (non représentées), pour le chargement de la poudre et pour le déchargement de l'objet après sa fabrication.

Sur la figure 1, tous les éléments représentés à l'intérieur de l'espace défini par le capotage 2 doivent être considérés comme faisant partie intégrante de la machine 1, capable d'être déplacée / manutentionnée à la manière d'un équipement unique.

La machine 1 comporte tout d'abord un espace de chargement 4 capable de contenir un ou plusieurs blocs solides 6, de forme complémentaire de celle de l'espace de chargement 4. A tout le moins, le bloc solide 6 doit pouvoir entrer dans l'espace de chargement 4.

Chaque bloc solide 6 est plein ou creux. Il contient de la poudre P1 destinée à la fabrication additive d'un objet, et un matériau P2 sous forme solide, capable de se sublimer.

La nature de la poudre P1 est déterminée en fonction de la composition souhaitée pour l'objet à fabriquer par impression 3D. A titre d'exemples non limitatifs, il peut s'agir de l'une des poudres suivantes, ou d'un mélange d'au moins deux de ces poudres :
- les poudres métalliques, par exemple en alliage de titane, alliage d'aluminium, alliage de nickel, superalliage, acier, acier inoxydable, réfractaire, métaux précieux ou matériaux purs (Fe, Cu, Al, etc.) ;
- les poudres organiques, par exemple en polyamide, polyéther bloc amide, polystyrène, polyétheréthercétone (PEEK), polyaryléthercétone (PAEK), polyamide chargé en aluminium ;
- les poudres minérales, par exemple quartz, céramique, sulfate de calcium, verre.

Pour ce qui concerne le matériau P2 capable de se sublimer, il est préférentiellement retenu le cyclododécane (C₁₂H₂₄). Même si d'autres matériaux sont bien entendu envisageables, le cyclododécane s'avère performant dans le cadre de l'invention, en raison de ses caractéristiques physiques, parmi lesquelles :
- à température ambiante (20°C +/- 5°C), il se présente sous forme solide avec un aspect blanc à translucide ;
- température de fusion : entre 58°C et 60°C ;
- température d'ébullition : 243°C;
- pression de vapeur : 0,1 hPa à 20°C ;
- enthalpie de sublimation : 63,017 - 76,400 kJ mol⁻¹ 25 °C ;

Le cyclododécane présente notamment les avantages suivants :
- vaporisation sans apport de solvant, grâce à sa capacité de sublimer;
- il peut se présenter sous forme de poudre de forte granulométrie, supérieure à 10µm ;
- il peut être facilement moulé pour obtenir une forme particulière ;
- il est applicable par spray, par gouttes liquides, ou par dispense directe ;
- il agit comme consolidant, liant et enrobage ;
- ses vitesse et cinétique de sublimation dépendent de plusieurs facteurs comme la température, la pression, la densité, la structure du matériau, l'épaisseur, l'état de surface, la composition chimique (dans cet exemple, fixée à C₁₂H₂₄), la porosité, le volume libre, etc. ;
- il présente des facteurs accélérant très fortement sa sublimation, comme son échauffement, par exemple à 50°C, ou encore une forte ventilation et/ou la mise sous vide ;
- il présente des facteurs ralentissant très fortement la sublimation, comme la congélation entre -15 et -20°C, la saturation du milieu environnant, la réfrigération entre 5 et 10°C ;
- après sa sublimation, il existe une possibilité de condenser facilement le matériau dans un piège froid ;
- il n'engendre pas de pollution de surface après sa sublimation.

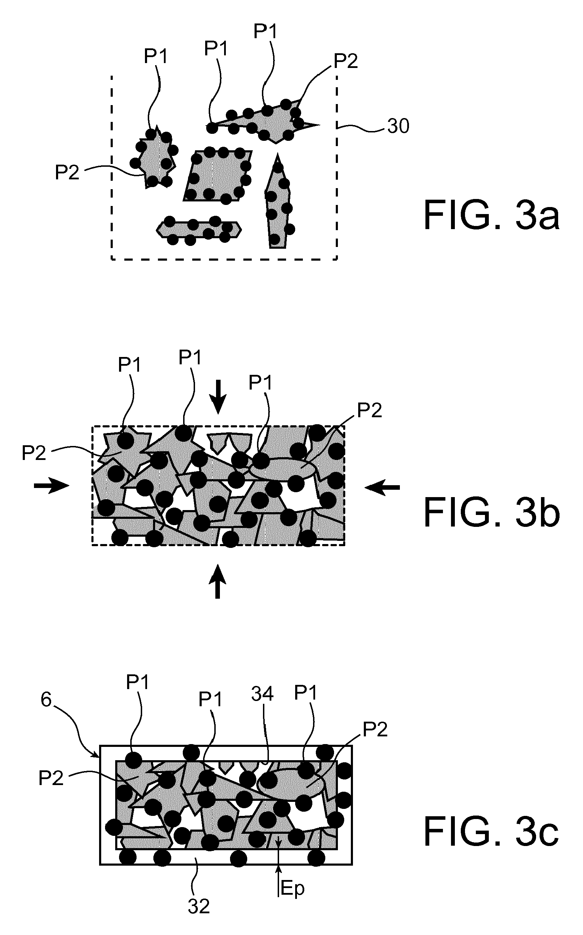

Tous ces avantages rendent ce matériau parfaitement adapté à la mise en oeuvre de l'invention, notamment pour la fabrication des blocs solides 6 dont certains exemples de réalisation seront décrits ci-après en référence aux figures 3a à 6b.

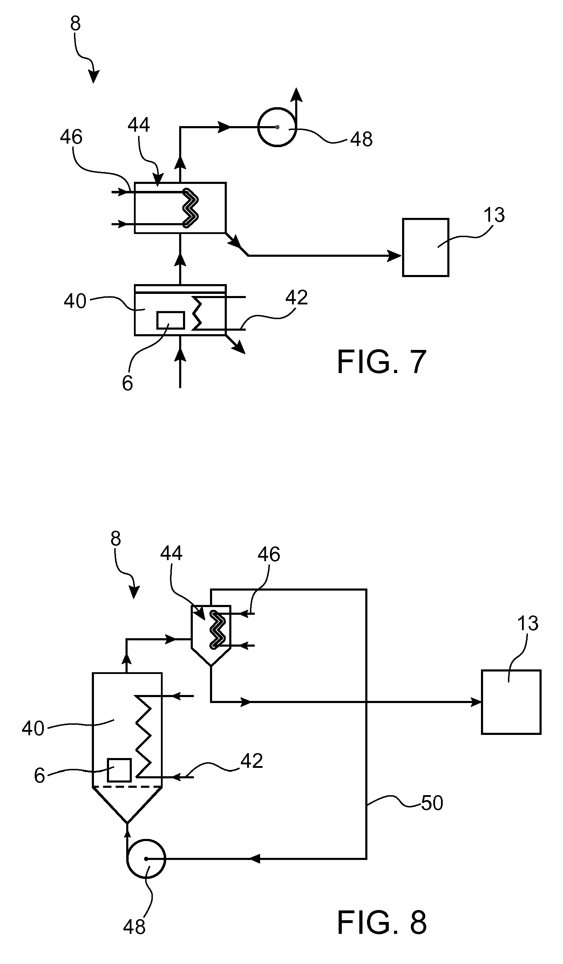

En outre, la machine de fabrication additive 1 comporte des moyens 8 permettant la sublimation dudit matériau présent dans le bloc solide 6. Des exemples de réalisation de ces moyens 8 seront décrits en référence aux figures 7 et 8.

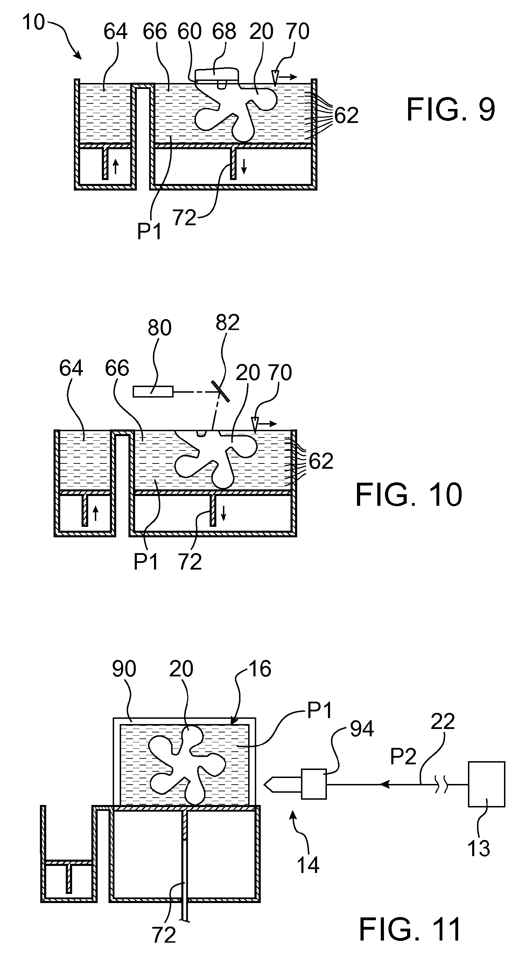

La machine 1 comporte également un module 10 de fabrication additive, de conception classique et dont certains exemples de réalisation seront décrits ci-après en référence aux figures 9 et 10. Des moyens 12 sont par ailleurs interposés entre les moyens 8 et le module 10. Ces moyens 12, comprenant par exemple une soufflerie et un canal de circulation de la poudre P1, permettent de récupérer et d'acheminer vers le module 10 la poudre P1 récupérée lors de la sublimation du matériau P2, opérée avec le bloc solide 6 placé dans l'espace de chargement 4.

La machine 1 comprend aussi des moyens 13 de récupération du matériau sublimé, ces moyens comprenant un piège froid de manière à récupérer ce matériau P2 sous forme solide.

Enfin, la machine 1 comporte des moyens 14 pour enrober un ensemble 16 comprenant la poudre non liée P1 et l'objet obtenu 20, entouré par cette poudre, et éventuellement un plateau ou support sur lequel l'objet est construit. Un exemple de réalisation de ces moyens 14 sera décrit ci-après en référence à la figure 11. A cet égard, il est noté que la machine peut également prévoir des moyens de communication 22 pour acheminer le matériau récupéré P2 des moyens 13 vers les moyens d'enrobage 14.

En référence à présent à la figure 2, il est représenté le déroulement des étapes d'un procédé de fabrication de l'objet 20, à l'aide de la machine 1. Sur cette figure 2, la ligne pointillée représente schématiquement la machine 1, et toutes les étapes représentées à l'intérieur de cette ligne pointillée doivent être considérées comme réalisées à l'intérieur de la machine, de façon automatisée. Ces étapes sont commandées de manière classique, par une unité de commande qui peut éventuellement être déportée de la machine 1.

Le procédé débute par une étape E1, visant à la fabrication d'un bloc solide 6. A ce propos, il est préférentiellement fabriqué un unique bloc solide 6 de forme complémentaire de celle de l'espace de chargement 4 de la machine. Néanmoins, il pourrait être fabriqué plusieurs blocs 6 qui, superposés dans l'espace de chargement 4, présenteraient ensemble une forme globale complémentaire de celle de cet espace. Cette dernière solution présente un avantage, notamment lorsque la composition de l'objet désiré est évolutive, puisqu'il devient alors aisé de fabriquer des blocs 6 à l'aide de différentes poudres, avant d'empiler ces blocs dans l'espace de chargement de la machine.

Plusieurs possibilités existent pour la fabrication des blocs solides 6. Quatre exemples de réalisation vont à présent être décrits. Toutefois, il est noté que ces exemples sont éventuellement combinables, en ce sens que des étapes décrites en relation avec certains exemples peuvent être appliquées à d'autres exemples, et réciproquement.

Tout d'abord en référence aux figures 3a à 3c, il est représenté un premier exemple de fabrication d'un bloc solide 6. Dans ce premier exemple, la poudre P1 est en alliage AlSi₁₂, avec une granulométrie de l'ordre de 30µm. Le matériau P2 capable de se sublimer est le cyclododécane sous forme de poudre, avec une granulométrie plus élevée, supérieure à 100µm. La proportion entre les poudres P1 et P2, en poids, est de l'ordre de 50-50. A titre indicatif, il est noté que la granulométrie de la poudre P1 n'est pas nécessairement supérieure à celle de la poudre P1, mais il est seulement fait en sorte que le matériau d'apport P2 ne soit pas pulvérulent. Sa granulométrie peut être alors supérieure ou inférieure à celle de la poudre P1 considérée.

La première étape schématisée sur la figure 3a consiste à mélanger à température ambiante les poudres P1 et P2 dans un récipient 30, de manière à obtenir un mélange non pulvérulent. L'association des grains des poudres P1 et P2 s'effectue par exemple par adsorption ou tout autre principe physique.

Une fois le mélange obtenu, il est procédé à la compaction du mélange à température ambiante, comme cela a été schématisé sur la figure 3b. Cette compaction est réalisée de manière à obtenir une forme sensiblement identique à la forme finale souhaitée pour le bloc, et en conservant un niveau de porosité suffisant pour faciliter l'étape ultérieure de sublimation du matériau P2.

Comme schématisé sur la figure 3c, la fabrication se poursuit par une opération de fusion du matériau P2 à la surface extérieure du mélange compacté, sur une épaisseur donnée « Ep ». Cette fusion est réalisée de sorte qu'après refroidissement de la zone périphérique en fusion du matériau P2, une paroi extérieure solide 32 s'étende sur l'épaisseur donnée « Ep ».

La solidification de la paroi extérieure 32 marque l'obtention du bloc solide 6, qui présente donc une forme creuse avec sa paroi 32 remplissant la fonction de coque d'épaisseur maîtrisée et définissant une cavité intérieure 34 dans laquelle se trouve le restant du mélange des poudres P1 et P2.

Dans cet exemple de fabrication, il est noté que la paroi extérieure 32 en forme de coque peut être exclusivement constituée par le matériau P2, ou bien correspondre à un mélange des poudres P1 et P2.

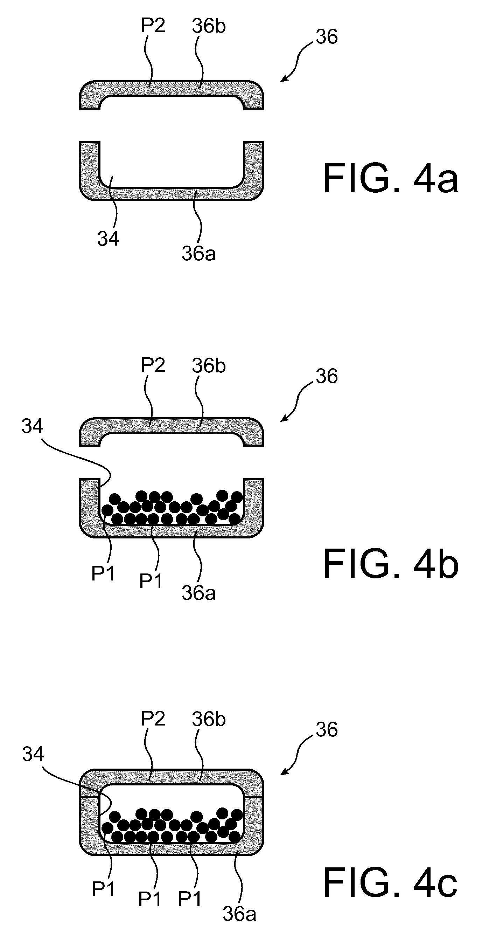

A présent en référence aux figures 4a à 4c, il est représenté un second exemple de fabrication d'un bloc solide 6. Dans ce second exemple, la poudre P1 et le matériau P2 répondent aux mêmes critères que ceux indiqués dans le cadre de la description du premier exemple décrit ci-dessus.

La fabrication débute par la réalisation d'un conteneur 36 à l'aide du matériau P2 sous forme de poudre compacté. Ce conteneur 36 comprend un corps 36a définissant une cavité intérieure 34, et un élément 36b de fermeture de la cavité intérieure, cet élément 36b prenant la forme d'un bouchon. Les deux parties 36a, 36b non assemblées du conteneur sont représentées sur la figure 4a. Ensuite, il est procédé à l'introduction de la poudre P1 dans la cavité intérieure 34 comme cela est montré sur la figure 4b, tandis que cette étape est suivie de la fermeture de la cavité intérieure 34 à l'aide de l'élément de fermeture 36b, comme visible sur la figure 4c. Cette fermeture peut s'opérer par scellement des éléments 36a, 36b, par exemple en les chauffant à leur interface, puis en les refroidissant pour solidifier la zone de jonction.

Cet exemple de fabrication est performant, car la partie du conteneur 36 à sublimer par la suite se situe uniquement à la périphérie de ce dernier. L'étape de sublimation peut ainsi être réalisée plus rapidement.

Dans une alternative de réalisation, les éléments 36a, 36b constitutifs du conteneur solide 36 peuvent être réalisés par un mélange des deux poudres P1, P2.

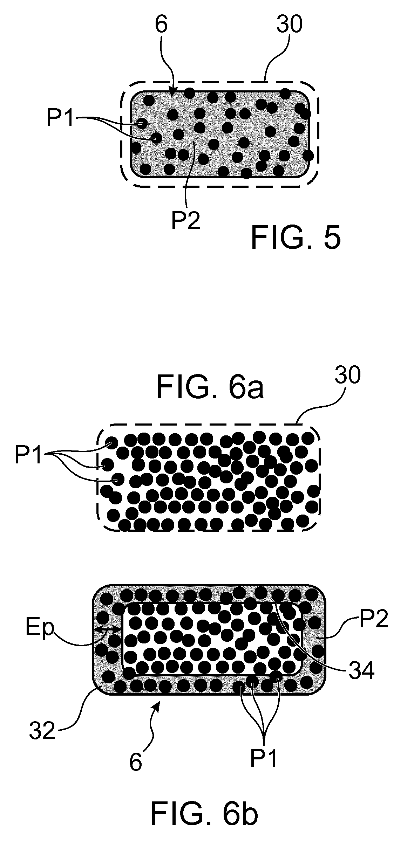

A présent en référence à la figure 5, il est représenté un troisième exemple de fabrication d'un bloc solide 6. Dans ce troisième exemple, la poudre P1 et le matériau P2 répondent aux mêmes critères que ceux indiqués dans le cadre de la description du premier exemple décrit ci-dessus.

La fabrication est débutée en amenant le matériau P2 sous forme liquide dans un récipient 30 formant un moule. Ensuite, dans ce même récipient, il est versé la poudre P1, qui est imprégnée par capillarité par la phase liquide du matériau P2. Inversement, la poudre P1 peut être introduite dans le récipient 30 avant le matériau P2. Il est ensuite procédé au mélange des deux phases, pour l'obtention d'un ensemble homogène.

Enfin, il est procédé au refroidissement du matériau P2 de manière à obtenir le bloc solide 6 à base du matériau P2 contenant la poudre P1. Le bloc 6 obtenu présente une forme extérieure le rendant adapté pour être directement logé dans l'espace de chargement de la machine de fabrication additive.

Avec ce troisième exemple de réalisation, la poudre P1 est parfaitement liée par le matériau P2. Les risques de dissémination de poudre P1 sont ainsi considérablement réduits, même en cas de casse du bloc solide 6.

Eventuellement, une paroi périphérique réalisée en matériau P2 peut être mise en place autour de l'ensemble obtenu montré sur la figure 5, sans sortir du cadre de l'invention.

A présent en référence aux figures 6a et 6b, il est représenté un quatrième exemple de fabrication d'un bloc solide 6. Dans ce quatrième exemple, la poudre P1 et le matériau P2 répondent aux mêmes critères que ceux indiqués dans le cadre de la description du premier exemple décrit ci-dessus.

La fabrication débute par la mise en place de la poudre P1 à température ambiante dans un récipient 30 formant un moule, comme cela a été schématisé sur la figure 6a. Ensuite, il est procédé à l'imprégnation de la poudre P1 par capillarité, à la périphérie de celle-ci, à l'aide du matériau P2 amené sous forme liquide et sur une épaisseur donnée « Ep ».

L'imprégnation est réalisée de sorte qu'après refroidissement de la zone périphérique en fusion du matériau P2, une paroi extérieure solide 32 s'étend sur l'épaisseur donnée « Ep », identifiée sur la figure 6b. La solidification de la paroi extérieure 32 marque l'obtention du bloc solide 6, qui présente donc une forme creuse avec sa paroi 32 remplissant la fonction de coque d'épaisseur maîtrisée et définissant une cavité intérieure 34 dans laquelle se trouve le restant de la poudre P1. Dans ce quatrième exemple de fabrication, il est noté que la paroi extérieure 32 en forme de coque peut être exclusivement constituée d'un mélange des poudres P1 et P2. Toutefois, une paroi périphérique réalisée uniquement en matériau P2 pourrait être mise en place autour de l'ensemble obtenu montré sur la figure 6b, sans sortir du cadre de l'invention.

De retour à la figure 2, la seconde étape E2 du procédé de fabrication de l'objet 20 consiste à charger le ou les blocs solides 6 obtenus, dans l'espace de chargement dédié de la machine 1. Ensuite, de préférence au sein de cet espace de chargement, il est mis en oeuvre une étape E3 de sublimation du matériau P2 contenu dans le bloc solide 6, et de récupération de la poudre P1 à son état initial, avant formation du bloc 6.

La sublimation s'effectue de manière conventionnelle à l'aide des moyens 8 précités, dont un premier exemple de réalisation est montré sur la figure 7. Ces moyens 8 permettent une sublimation simple sous vide, tout d'abord à l'aide d'une chambre de sublimation 40 dans laquelle est placé le bloc solide 6. Comme dans tout appareil de sublimation, la chambre 40 est équipée d'un moyen de chauffage 42 pour le chauffage du bloc 6. De plus, les moyens 8 comprennent un condenseur 44 équipé d'un dispositif de refroidissement 46, ainsi qu'une pompe à vide 48 permettant d'appliquer un vide dans la chambre 40 et le condenseur 44. Avec cette installation conventionnelle connue de l'homme du métier et qui ne sera pas davantage décrite, le matériau P2 se sublime sur la paroi extérieure du condenseur 44, puis cette phase gazeuse est acheminée vers les moyens 12 pour la récupération de ce matériau P2 à l'aide d'un piège froid. Cette récupération du matériau P2 par condensation fait l'objet d'une étape E'3, réalisée à l'aide des moyens 12 dédiés. Comme évoqué précédemment, une fois récupéré sous forme solide, le matériau 12 peut servir à la fabrication d'un nouveau bloc solide 6, et/ou à l'enrobage de l'ensemble 16 obtenu en fin de procédé.

Selon un second exemple de réalisation montré sur la figure 8, les moyens 8 comprennent un circuit 50 permettant la circulation d'un gaz inerte à travers les différents composants, identiques ou similaires à ceux décrits dans le premier exemple, et présentant de ce fait les mêmes références numériques. Le gaz inerte remplit alors la fonction de gaz porteur circulant en continu, ce qui permet d'agir à pression atmosphérique et à opérer en continu sur le bloc solide 6. Avec cette technique, appelée sublimation par entraînement, le gaz porteur est recyclé en continu de manière à ne pas perdre de matériau sublimable.

Quelle que soit la technique de sublimation retenue, au fur et à mesure que le matériau P2 du bloc 6 se sublime, la poudre P1 est libérée et récupérée par les moyens 12. De préférence, elle retrouve son caractère pulvérulent, favorable à l'obtention d'un objet 20 de qualité. Sa fluidité (également dénommée « coulabilité ») retrouvée lui permet d'être acheminée vers le module 10 de fabrication additive, au sein duquel il est mis en oeuvre une étape E4 de fabrication additive de l'objet 20.

Il est noté que pour les procédés de fabrication additive par fusion ou frittage, la séparation des éléments P1 et P2 peut être complète, ou seulement partielle. En effet, il n'est pas interdit qu'une faible partie du matériau P2 (ici, le cyclododécane) reste associée à la poudre P1 après l'étape de séparation. Celle-ci sera alors supprimée par l'élévation de température liée à l'étape ultérieure de fusion ou de frittage. Dans ces conditions, le critère lors de la séparation des poudres P1 et P2 est donc seulement que la poudre P1 retrouve des paramètres physiques (coulabilité notamment) nécessaires et suffisants pour permettre sa mise en couche.

La fabrication additive E4 en tant que telle est conventionnelle, de sorte qu'elle ne sera décrite que très succinctement. Selon un premier exemple de réalisation du module 10 montré sur la figure 9, il est mis en oeuvre une technique de projection d'un liant 60 sur des couches successives 62 de poudre P1. Pour ce faire, le module 10 comporte un réservoir 64 de poudre P1 qui sert de substrat dans le dépôt de liant. Il comprend également un volume 66 de poudre qui enserre la ou les pièces fabriquée(s), ce volume 66 étant constitué par les couches successives 62.

Le module comporte une tête 68 de projection du liant 60, ainsi qu'un système racleur 70 de mise en place de la couche suivante. Enfin, il comprend un plateau 72 qui supporte l'ensemble de la chambre de fabrication. De façon connue, c'est le chargement dans le réservoir 64 de la poudre récupérée P1 qui sert à alimenter la chambre de fabrication. Après lancement de la fabrication, le racleur 70 opère des mouvements de balayage de gauche à droite afin de prendre un volume de poudre dans le réservoir 64 pour ensuite l'étaler en un lit de poudre d'une épaisseur de quelques dizaines de micromètres, dans le bac de fabrication de la pièce. Le plateau support 72 démarre donc en position « haute » et à chaque nouvelle couche 62, abaisse sa position d'un incrément pour permettre le passage du racleur et la formation d'un nouveau lit de poudre. A chaque lit de poudre ainsi formé, une partie est solidifiée par ajout du liant 60. Couche après couche, l'objet 20 est fabriqué, celui-ci se trouvant au final entouré de poudre non liée P1.

Le second exemple de réalisation montré sur la figure 10 diffère du premier en ce que la technique mise en oeuvre est du type fusion sélective par laser ou par faisceau d'électrons, ou bien du type frittage sélectif par laser ou par faisceau d'électrons. Dans les deux cas, le principe est de faire fondre ou fritter le lit de poudre par un faisceau laser ou un faisceau d'électrons 80, de préférence à l'aide d'un ou plusieurs miroirs galvanométriques 82.

L'étape suivante du procédé schématisé sur la figure 2 est l'étape E5 d'enrobage total ou partiel de l'ensemble 16 contenant l'objet 20 et la poudre non liée P1. Comme évoqué précédemment, cette étape d'enrobage E5 est réalisée à l'aide des moyens dédiés 14 et à partir d'une quantité donnée du matériau P2, provenant des moyens de récupération 13 et/ou d'un apport extérieur pour disposer d'un matériau dit « neuf ».

Pour réaliser l'enrobage de l'ensemble 16, également dénommé encapsulage total ou partiel, le plateau support 72 est déplacé vers le haut de manière à faire sortir l'ensemble 16 du bac de fabrication. Comme cela a été schématisé sur la figure 11, au fur et à mesure que l'ensemble 16 sort du bac, une paroi périphérique 90 en matériau P2 lui est appliquée sur sa surface extérieure. Cette paroi périphérique 90 prend ainsi la forme d'une capsule partielle ou totale, d'épaisseur suffisante pour que l'ensemble encapsulé puisse ensuite être déplacé sans risque. Toutefois, le matériau P2 appliqué sur la surface extérieure de l'ensemble 16 en déplacement est préférentiellement amené à l'état liquide, après chauffage, de manière à imprégner la poudre P1 par capillarité. Cela permet une application de la phase liquide par projection de gouttes à l'aide d'un équipement approprié 94, voire une application directe dans laquelle la phase liquide du matériau P2 est directement coulée en continu sur l'ensemble 16 depuis un réservoir dédié (non représenté). Une autre alternative de réalisation consiste à appliquer le matériau P2 à l'aide d'un spray, ou par jet d'encre afin de vaporiser ou projeter de fines gouttelettes sur la surface extérieure de l'ensemble 16.

Sur l'exemple de la figure 11, la paroi périphérique 90 en matériau P2 s'étend tout autour de l'ensemble 16, à l'exception de sa face inférieure directement au contact avec le plateau support 72. Dans ce cas de figure, l'ensemble enrobé 16 peut ensuite être déplacé vers un autre poste de travail en masquant la face non-enrobée de cet ensemble, voire en conservant cet ensemble 16 plaqué contre le plateau support 72 jusqu'à cet autre poste de travail. Toutefois, il serait également possible de mettre en place une couche initiale solide en matériau P2 au fond du bac de fabrication, en contact avec le plateau support 72, de manière à obtenir au final une encapsulation totale de l'ensemble 16.

Après extraction de l'ensemble enrobé 16 de la machine 1, le procédé de fabrication s'achève par l'étape E6 d'extraction de l'objet 20. Cette étape E6 est mise en oeuvre après avoir placé l'ensemble enrobé 16 sur un autre poste de travail, de préférence dans une boîte à gants (non représentée). Lors de cette étape E6, il est d'abord procédé au retrait de l'enrobage 90, qui peut ensuite être récupéré pour la fabrication d'un nouveau bloc solide 6. L'objet 20 se trouve à ce stade entourée de poudre non liée P1. Cette étape consiste donc à ôter la poudre non liée, par aspiration ou époussetage, puis à récupérer le plateau support 72 sur lequel l'objet a été construit progressivement, lorsque ce plateau a été déplacé avec l'ensemble enrobé 16 dans la boîte à gants.

Bien entendu, diverses modifications peuvent être apportées par l'homme du métier à l'invention qui vient d'être décrite, uniquement à titre d'exemples non limitatifs.

## Revendications

1. Procédé de fabrication additive d'un objet (20) à l'aide d'au moins une poudre (P1), **caractérisé en ce qu'**il comprend les étapes successives suivantes :
- fabrication d'un bloc solide (6) à partir de ladite poudre (P1) et d'un matériau (P2) capable de se sublimer;
- chargement du bloc solide (6) dans un espace de chargement (4) d'une machine (1) de fabrication additive ;
- sublimation dudit matériau (P2) présent dans le bloc solide (6) et récupération de ladite poudre (P1); et
- fabrication additive de l'objet (20) par empilement de couches successives (62) réalisées à l'aide de la poudre (P1) récupérée à l'étape précédente.

2. Procédé de fabrication additive selon la revendication 1, **caractérisé en ce qu'**il comprend, après l'étape de fabrication additive de l'objet, une étape d'enrobage partiel ou total d'un ensemble (16) comprenant la poudre non liée (P1) et l'objet (20) entouré par cette poudre, l'enrobage étant effectué à l'aide d'un matériau capable de se sublimer, de préférence à l'aide de tout ou partie dudit matériau (P2) récupéré lors de ladite étape de sublimation.

3. Procédé de fabrication additive selon la revendication 2, **caractérisé en ce que** ledit matériau (P2) est appliqué autour dudit ensemble (16) à l'état liquide afin d'imprégner par capillarité ladite poudre (P1), l'application étant réalisée par application directe ou par projection de gouttes, ou **en ce que** ledit matériau (P2) est appliqué autour dudit ensemble (16) à l'aide d'un spray.

4. Procédé de fabrication additive selon la revendication 2 ou la revendication 3, **caractérisé en ce qu'**après l'étape d'enrobage, l'ensemble enrobé (16) est extrait de la machine (1) de fabrication additive et transféré à un autre poste de travail pour extraction dudit objet (20).

5. Procédé de fabrication additive selon l'une quelconque des revendications précédentes, **caractérisé en ce qu'**après ladite étape de sublimation, il est mis en oeuvre une étape de récupération dudit matériau sublimé (P2), à l'aide d'un piège froid.

6. Procédé de fabrication additive selon l'une quelconque des revendications précédentes, **caractérisé en ce que** ledit matériau capable de se sublimer (P2) est du cyclododécane.

7. Procédé de fabrication additive selon l'une quelconque des revendications précédentes, **caractérisé en ce que** ladite étape de fabrication du bloc solide (6) à partir de ladite poudre (P1) et du matériau capable de se sublimer (P2), s'effectue de la manière suivante :
- mélange de ladite poudre (P1) et du matériau (P2) de façon à obtenir un mélange non pulvérulent ;
- compaction du mélange à température ambiante ;
- fusion dudit matériau (P2) à la surface extérieure du mélange compacté, sur une épaisseur donnée (Ep), de manière à obtenir après refroidissement une paroi extérieure solide (32) s'étendant sur ladite épaisseur donnée, ladite paroi extérieure (32) du bloc solide (6) définissant une cavité intérieure (34) dans laquelle se trouve le restant du mélange de ladite poudre (P1) et dudit matériau (P2).

8. Procédé de fabrication additive selon l'une quelconque des revendications 1 à 6, **caractérisé en ce que** ladite étape de fabrication du bloc solide (6) à partir de ladite poudre (P1) et du matériau (P2) capable de se sublimer, s'effectue de la manière suivante :
- réalisation d'un conteneur (36) à l'aide dudit matériau (P2), ledit conteneur comprenant un corps (36a) définissant une cavité intérieure (34), et un élément (36b) de fermeture de la cavité intérieure (34) ;
- introduction de la poudre (P1) dans la cavité intérieure (34) ;
- fermeture de la cavité intérieure (34) à l'aide dudit élément de fermeture (36b).

9. Procédé de fabrication additive selon l'une quelconque des revendications 1 à 6, **caractérisé en ce que** ladite étape de fabrication du bloc solide (6) à partir de ladite poudre (P1) et du matériau (P2) capable de se sublimer, s'effectue de la manière suivante :
- amenée dudit matériau (P2) sous forme liquide dans un moule (30) puis versement de la poudre (P1) dans le moule contenant le matériau (P2) sous forme liquide, ou inversement ;
- refroidissement du matériau (P2) de manière à obtenir un bloc solide de matériau (P2) contenant la poudre (P1).

10. Procédé de fabrication additive selon l'une quelconque des revendications 1 à 6, **caractérisé en ce que** ladite étape de fabrication du bloc solide (6) à partir de ladite poudre (P1) et du matériau (P2) capable de se sublimer, s'effectue de la manière suivante :
- mise en place de la poudre (P1) dans un moule (30) ;
- imprégnation de la poudre (P1) à la périphérie de celle-ci, à l'aide du matériau (P2) sous forme liquide et sur une épaisseur donnée (Ep), de manière à obtenir après refroidissement une paroi extérieure solide (32) s'étendant sur ladite épaisseur donnée (Ep), ladite paroi extérieure (32) du bloc solide (6) définissant une cavité intérieure (34) dans laquelle se trouve le restant de ladite poudre (P1).

11. Procédé de fabrication additive selon l'une quelconque des revendications précédentes, **caractérisé en ce que** ladite étape de fabrication additive de l'objet (20) est réalisée par l'une quelconque des techniques suivantes :
- fusion sélective par laser ou par faisceau d'électrons ;
- frittage sélectif par laser ou par faisceau d'électrons ;
- projection d'un liant (60) sur les couches successives (62) de poudre (P1).

12. Procédé de fabrication additive selon l'une quelconque des revendications précédentes, **caractérisé en ce que** ladite poudre (P1) est prise parmi :
- les poudres métalliques, par exemple en alliage de titane, alliage d'aluminium, alliage de nickel, superalliage, acier, acier inoxydable, réfractaire, métaux précieux, métaux purs ou sous forme d'alliage ;
- les poudres organiques, par exemple en polyamide, polyéther bloc amide, polystyrène, polyétheréthercétone (PEEK), polyaryléthercétone (PAEK), polyamide chargé en aluminium ;
- les poudres minérales, par exemple quartz, céramique, sulfate de calcium.

13. Machine (1) de fabrication additive pour la mise en oeuvre du procédé selon l'une quelconque des revendications précédentes, **caractérisée en ce qu'**elle comporte :
- ledit espace de chargement (4) du bloc solide (6) contenant la poudre (P1) et le matériau (P2) capable de se sublimer;
- des moyens (8) permettant la sublimation dudit matériau (P2) présent dans le bloc solide (6) ;
- un module (10) de fabrication additive ; et
- des moyens (12) permettant de récupérer, et d'acheminer vers ledit module (10), la poudre (P1) récupérée suite à la sublimation dudit matériau (P2).

14. Machine de fabrication additive selon la revendication 13, **caractérisée en ce qu'**elle comprend des moyens (13) de récupération dudit matériau sublimé (P2), lesdits moyens (13) comprenant ledit piège froid.

15. Machine de fabrication additive selon la revendication 13 ou la revendication 14, **caractérisée en ce qu'**elle comporte des moyens (14) pour enrober l'ensemble (16) comprenant la poudre non liée (P1) et l'objet (20) entouré par cette poudre.
